# EUROPÄISCHE PATENTSCHRIFT

(11) **EP 1 651 477 B1**
(45) Veröffentlichungstag und Bekanntmachung des Hinweises auf die Patenterteilung: **02.07.2008**
(21) Anmeldenummer: 04741273.9
(22) Anmeldetag: 26.07.2004
(51) Int. Cl.: B60R 21/16, D05B 23/00

(54) **VERFAHREN ZUR VERARBEITUNG EINES TEXTILEN FLÄCHENGEBILDES, TEXTILES FLÄCHENGEBILDE, BEZUG UND VORRICHTUNG, INSBESONDERE FAHRZEUGSITZ**
METHOD FOR PROCESSING A TEXTILE SHEET MATERIAL, TEXTILE SHEET MATERIAL, COVER AND DEVICE, IN PARTICULAR A VEHICLE SEAT
PROCEDE DE TRAVAIL D'UNE STRUCTURE TEXTILE, STRUCTURE TEXTILE, REVETEMENT ET DISPOSITIF POURVU D'UN TEL REVETEMENT, NOTAMMENT SIEGE DE VEHICULE

(30) Priorität: 28.07.2003 DE 10334644
(43) Veröffentlichungstag der Anmeldung: 03.05.2006
(73) Patentinhaber: Johnson Controls GmbH, 51399 Burscheid (DE)
(72) Erfinder: KÜTTNER, Jürgen, 51371 Leverkusen (DE); ZIMMER, Manfred, 40764 Langenfeld (DE); HARTMANN, Anja, 51503 Rösrath (DE); DERNER, Beatrice, 42105 Wuppertal (DE)
(74) Vertreter: Wolff, Felix
(86) Internationale Anmeldenummer: PCT/EP2004/008351
(87) Internationale Veröffentlichungsnummer: WO 2005/012050

(56) Entgegenhaltungen:
- PATENT ABSTRACTS OF JAPAN Bd. 1997, Nr. 09, 30. September 1997 (1997-09-30) & JP 9 123861 A (TAKASHIMAYA NIPPATSU KOGYO KK), 13. Mai 1997 (1997-05-13)
- PATENT ABSTRACTS OF JAPAN Bd. 1998, Nr. 10, 31. August 1998 (1998-08-31) & JP 10 129392 A (T S TEC KK), 19. Mai 1998 (1998-05-19)
- PATENT ABSTRACTS OF JAPAN Bd. 2002, Nr. 06, 4. Juni 2002 (2002-06-04) & JP 2002 037004 A (T S TEC KK), 6. Februar 2002 (2002-02-06)
- PATENT ABSTRACTS OF JAPAN Bd. 1998, Nr. 01, 30. Januar 1998 (1998-01-30) & JP 9 254735 A (TOYO TIRE & RUBBER CO LTD; TAKASHIMAYA NIPPATSU KOGYO KK), 30. September 1997 (1997-09-30)

## Beschreibung

Die Erfindung betrifft ein Verfahren zur Verarbeitung eines textilen Flächengebildes nach dem Oberbegriff des Anspruchs 1. Insbesondere bei Fahrzeugen ist es üblich, im Innenraum Gewebe bzw. Stoffe, zu verwenden, die einerseits einen ästhetischen Wert zur Aufwertung des optischen Eindrucks des Fahrzeuginnenraums aufweisen und zum anderen eine Sicherheitsfunktion erfüllen, beispielsweise harte oder scharfe Kanten von Komponenten des Fahrzeugs, beispielsweise Fahrzeugsitze, abdecken. Hierzu müssen solche textile Flächengebilde oftmals genau vorgegebene und verlässlich reproduzierbare Eigenschaften, insbesondere hinsichtlich ihrer Reißfestigkeit bzw. generell ihrer Widerstandsfähigkeit, aufweisen. Insbesondere ist bei Fahrzeugen, insbesondere bei Kraftfahrzeugen, zur Vergrößerung der Sicherheit ihrer Benutzer, insbesondere der Insassen, häufig ein oder mehrere sogenannte Airbags vorgesehen. Bekannt sind sog. Seitenaufprall-Airbags, die entweder in einer Fahrzeugtür oder in einem Fahrzeugssitz angebracht sind. Ein solcher Sitz weist insbesondere eine Sitzfläche und eine Rückenlehne auf und ist für eine vorteilhafte optische Gestaltung in der Regel mit einem Bezug überzogen vorgesehen. Ein solcher Fahrzeugsitz ist lediglich ein Beispiel für eine im Folgenden auch als Vorrichtung bezeichnete Fahrzeugkomponente. Das Vorsehen eines Airbags bringt es in der Regel mit sich, dass ein sog. Airbagmodul im Bereich des Sitzes bzw. der Fahrzeugkomponente vorgesehen ist. Das Airbagmodul bzw. der Airbag wird im Folgenden vereinfachend als "Airbag" bezeichnet. Es ist erfindungsgemäß einerseits notwendig, dass beim Dauergebrauch des Fahrzeugs über seine gesamte Lebensdauer hinweg ein vorteilhaftes Aussehen der Komponente bzw. des Sitzes gewährleistet wird und andererseits ist es notwendig, dass im Falle, dass die Auslösung des Airbags notwendig erscheint, eine sichere und in allen Situationen gewährleistete richtige und vollständige Auslösung und Entfaltung des Airbags erreicht wird. Diese Anforderungen schließen sich weiterhin der Forderung nach einer kostengünstigen Produktion und der Verwendung kostengünstiger Materialien an. Hierzu ist es beispielsweise allgemein bekannt, bei einem Fahrzeugsitz, in den ein Airbag integriert ist, einen Bezug des Sitzes derart vorzusehen, dass der sich im Falle einer Unfallsituation des Fahrzeugs aufblasende Airbag eine Naht des Bezugs aufreist, um eine Austrittsöffnung zu bilden, durch die sich der Seitenaufprall-Airbag ausdehnt. Weiterhin ist es allgemein bekannt, vorzusehen, dass durch das Anbringen einer Verstärkungsbahn die Orte, an denen der Airbag aus dem Sitz austritt, eingeschränkt werden. Hierbei ist es nachteilig, dass der Ort, an dem der Airbag aus dem Sitz austreten kann, trotzdem nicht genau definiert ist, weil alle übrigen Orte (außerhalb des Verbindungsbereichs) als Austrittsorte in Frage kommen. Diese Wirkung wird dadurch verschlimmert, dass die Festigkeitswerte der meisten als Bezugsmaterial verwendeten Materialien eine große Streuung über unterschiedliche Produktionschargen und eine große Streuung über den für die Anwendung in einem Kraftfahrzeug einschlägigen Temperaturbereich aufweisen.

Aus der JP-A-9 123861 ist ein Sitzbezug mit einer Sollbruchstelle für den Austritt eines in einem Seitenteil angeordneten Airbags bekannt, wobei der Sitzbezug für das Seitenteil mit einem Bezugmaterial der Sitzoberfläche mittels einer Naht nicht direkt vernäht ist. Gemeinsam mit einer Airbagführung wird eine zuverlässigere Öffnung der Sollbruchstelle durch den austretenden Airbag erreicht.

Insgesamt ist damit die Wirkung eines Airbags weniger gut vorhersehbar, was die Anzahl der vor oder während der Produktion solcher Sitze notwendigen Tests und dadurch die Kosten vergrößert. Die Festigkeitswerte von textilen Flächengebilden, insbesondere die Festigkeitswerte von Nähten von miteinander vernähten textilen Flächengebilden sind bekannterweise oftmals davon abhängig, ob das Material des vernähten Flächengebildes ausfast bzw. ausfranst, d. h. ob die Struktur des Materials, beispielsweise seine Gewebestruktur, beständig ist oder nicht. Bekannte textile Flächengebilde, beispielsweise Gewebe, neigen dazu, nach dem Zuschnitt ihre Gewebestruktur insbesondere randseitig zu verlieren, beispielsweise durch Fransenbildung. Diese Veränderung der Gewebestruktur beeinträchtigt die Stabilität eines solchen Flächengebildes, was insbesondere für eine Verwendung solcher Flächengebilde als sogenannte Airbag-Gürtel bzw. als Stabilisierungsschichten sicherheitskritisch ist, so dass Maßnahmen zur Vermeidung eines solchen Ausfransens notwendig sind, beispielsweise durch einen lasergeführten Zuschnitt der Stabilisierungsschicht mit nachfolgender teilweise durchgeführter Verschmelzung der randseitigen Fasern. Bei dieser Maßnahme ist es jedoch nachteilig, dass ein erneutes Zuschneiden des Flächengebildes wiederum die Gefahr einer neuerlichen Schwächung der Nahteigenschaften birgt. Nachteilig ist daher, dass bekannte textile Flächengebilde in ihrer Struktur nicht (oder bei versiegelter Kante nur an dieser selbst) beständig sind.

Der Erfindung liegt daher die Aufgabe zugrunde, ein textiles Flächengebilde und ein Verfahren zu dessen Verarbeitung zu schaffen, bei dem ein Höchstmass an Genauigkeit der Festigkeitswerte und ein Höchstmass an Reproduzierbarkeit der Festigkeitswerte des Flächengebildes bei geringen Kosten an Material und bei einer geringen Anzahl von vor oder während der Produktion durchzuführenden Tests zur Bestimmung von Festigkeitswerten kombiniert wird mit einem geringen Aufwand während der Produktion und der Weiterverarbeitung des Flächengebildes, insbesondere während der Herstellung von Nähten eines Bezugs, in dem das erfindungsgemäße Flächengebilde Verwendung findet.

Diese Aufgabe wird erfindungsgemäß durch ein Verfahren zur Verarbeitung eines textilen Flächengebildes gelöst, wobei das Flächengebilde in einem ersten Schritt in einem Versiegelungsbereich versiegelt wird, wobei der Versiegelungsbereich wenigstens einen Teilbereich der Oberfläche des Flächengebildes umfasst, wobei in einem zweiten Schritt eine Naht in das Flächengebilde eingebracht wird und wobei das Flächengebilde in einem dritten Schritt entlang einer Zuschnittslinie zugeschnitten wird. Durch die erfindungsgemäße Möglichkeit, das Flächengebilde nach dem Versiegelungsschritt und auch noch nach einem Nähschritt zu schneiden, ist es möglich die Herstellungskosten für das Flächengebilde und damit auch für ein daraus herzustellendes Produkt wie beispielsweise einen Airbag oder einen Bezug zu verringern, weil beispielsweise ungenau übereinanderliegende Schichten des Bezugs vor einem Vernähen bündig abgeschnitten werden können, was den Nähvorgang erleichtert und damit verbilligt. Weiterhin wird die Aufgabe durch ein insbesondere gemäß des Verfahrens gefertigtes textiles Flächengebilde mit einer Naht, einer Oberfläche und wenigstens einer Kante gelöst, wobei das Flächengebilde in einem Versiegelungsbereich versiegelt vorgesehen ist, wobei der Versiegelungsbereich wenigstens einen Teilbereich der Oberfläche des Flächengebildes (und nicht lediglich die Kante oder den Kantenbereich) umfasst. Hierbei entspricht die Kante der Zuschnittslinie, d.h. vor der Zuschneideoperation verläuft die Zuschnittslinie auf dem Zuschnitt des Flächengebildes, wobei der Ort der Zuschnittslinie nach der Durchführung der Zuschneideoperation die Kante bildet. Durch die Versiegelung ist es vorteilhaft möglich, dass das Flächengebilde- obwohl es insbesondere ein sicherheitskritisches Teil der Komponente bzw. des Fahrzeugsitzes ist - genauso weiterverarbeitet und insbesondere geschnitten werden kann, wie andere, für Bezüge bzw. mit Bezügen von Fahrzeugkomponenten üblicherweise verwendete Materialien, da das Ausfransen des Materials im Versiegelungsbereich durch die Versiegelung verhindert wird. Bevorzugt ist vorgesehen, dass die Zuschnittslinie und/oder dass die Naht im Versiegelungsbereich vorgesehen ist bzw. dass der Versiegelungsbereich an die wenigstens eine Kante angrenzend vorgesehen ist und/oder dass die Naht im Versiegelungsbereich vorgesehen ist. Dadurch wird vorteilhafterweise ein Ausfransen bzw. Ausfasen des Flächengebildes im Bereich der Naht und/oder im Bereich der Zuschnittlinie, d.h. der nach dem Zuschnittvorgang verbleibenden Schnittkante, vermieden. Dies senkt die Kosten zur Produktion und insbesondere zum Vernähen des erfindungsgemäßen Flächengebildes und der dieses enthaltenden Vorrichtungen erheblich und erlaubt es ferner einen größeren Gestaltungsspielraum hinsichtlich Formgebung und Design der Fahrzeugkomponente bzw. der erfindungsgemäßen Vorrichtung zu haben. Das Flächengebilde wird im folgenden auch als Airbaggürtel bezeichnet und ist in einer besonders vorteilhaften Ausführungsform als ein schlaufenartiger Gürtel vorgesehen, der in den Sitzbezug eingenäht wird. Der Airbaggürtel nimmt dann das beispielsweise am Rahmen der Sitzlehne befindliche Airbagmodul für einen sitzintegrierten Airbag auf.

Versiegelung im Sinne der Erfindung bedeutet vorzugsweise, dass die Fasern des Gewebes zumindest teilweise so miteinander verbunden werden, dass sich das Gewebe nicht auflöst; d.h. ausfranst. Dieses Verbinden kann durch eine zumindest teilweises temporäres aufweichen der Gewebestruktur beispielsweise unter Einwirkung von Temperatur oder einem Lösmittel erfolgen. Weiterhin ist es möglich die Fasern mit einem Klebstoff miteinander zu verbinden. Oftmals ist eine Verbindung der Fasern untereinander an der Gewebeoberfläche ausreichend.

Bevorzugt ist es vorgesehen, dass die Zuschnittslinie im Wesentlichen parallel zur Naht und/oder dass wenigstens eine Kante im Wesentlichen parallel zur Naht vorgesehen ist und/oder dass der Versiegelungsbereich im Wesentlichen parallel zu der Kante in einer vorgegebenen Breite, insbesondere 5 mm, vorgesehen ist. Hierdurch ist es möglich, die Nahtzugabe so gering wie möglich zu halten und trotzdem eine sehr stabile und vor allem reproduzierbar stabile Verbindung der Naht zu erhalten. Für die nachfolgende Verarbeitung des Flächengebildes beispielsweise zu Bezügen ist es damit möglich, dass die Nahtfahne die geringstmögliche Größe, d.h. Breite, aufweist und so die Naht entsprechend wenig Volumen aufweist. Somit kann eine aus technischen Gründen notwendige Nahtzugabe (Überstand) von beispielsweise 8 mm, die ohne einen nachfolgenden Zuschnitt des Flächengebildes den Nahtbereich unschön verdicken würde, nachfolgend gekürzt werden, beispielsweise auf 5 mm, ohne dass die Naht, die im folgenden auch als Befestigungsnaht bezeichnet wird, an Halt verliert. Weiterhin ist es vorteilhafterweise vorgesehen, dass der Versiegelungsbereich in einem Randbereich des Flächengebildes vorgesehen ist. Dadurch kann das Flächengebilde in einfacher Weise gemäß bekannter und kostengünstig einsetzbarer Verfahren bearbeitet und ein Bezug hergestellt werden. Darüber hinaus ist es erfindungsgemäß vorteilhafterweise vorgesehen, dass der Versiegelungsbereich beabstandet von der Kante des Flächengebildes und in einer vorgegebenen Breite, insbesondere 5 mm, vorgesehen ist. Dadurch ist es möglich, sowohl den Rand des Flächengebildes scheidbar zu gestalten und gleichzeitig den Versiegelungsbereich vergleichsweise klein zu halten, was die Kosten zur Herstellung des Versiegelungsbereichs verkleinert. Vorzugsweise ist es weiterhin vorteilhaft möglich, den nicht ausfransenden Versiegelungsbereich im Randbereich, jedoch im Inneren des Flächengebildes derart vorzusehen, dass die Befestigungsnaht im Versiegelungsbereich vorgesehen ist. Damit kann der zu versiegelte Bereich klein gehalten werden, was die Produktionskosten des erfindungsgemäßen Flächengebildes herabsetzt.

Vorzugsweise ist vorgesehen, dass das Flächengebilde in dem Versiegelungsbereich mittels einer Ultraschallbehandlung versiegelt wird. Hierdurch ist eine besonders schonende und wenig zerstörungsträchtige Versiegelungsart möglich, die darüber hinaus mittels einer bekannten und kostengünstig einsetzbaren Technologie anwendbar ist. Alternativ zu einer Versieglung mittels Ultraschallbehandlung ist es erfindungsgemäß auch vorgesehen, das Flächengebilde mittels eines Klebers zu versiegeln. Ein solcher Kleber kann dabei entweder mittels eines anderen Materials als das Material des Flächengebildes vorgesehen sein oder - bevorzugterweise - mittels des gleichen Materials des Flächengebildes vorgesehen sein. Im zweiten alternativen Fall, d.h. der Verwendung eines Klebers bzw. eines das Flächengebilde versiegelnden, d.h. die Fasern des Flächengebildes verbindenden Materials, welches chemisch zum Fasermaterial weitgehend identisch ist, ist es besonders vorteilhaft, dass zusätzliche Tests und Versuchsreihen zur Untersuchung des Einflusses eines chemisch anderen Materials weitgehend vermieden werden können.

Vorzugsweise ist das Flächengebilde weiterhin derart vorgesehen, dass die Naht wenigstens teilweise als Sollbruchstelle vorgesehen ist. In diesem Fall dient die Naht zumindest in Teilbereichen als vorgesehene Bruchstelle beim Vorliegen besonderer Belastungsverhältnisse, beispielsweise bei dem Öffnen bzw. dem Entfalten eines Airbag, der in der von dem Flächengebilde umhüllten Vorrichtung oder Komponente des Fahrzeugs, vorgesehen ist.

Vorzugsweise ist weiterhin vorgesehen, dass das Flächengebilde ein Gewebe, insbesondere ein Kunststoffgewebe, vorzugsweise ein Polyamid-Material und besonders bevorzugt ein PA 6.6 (PolyAmid 6.6)-Material ist. Dies hat den Vorteil, dass auf bekannte und weithin beherrschte Materialien zurückgegriffen werden kann, die darüber hinaus noch kostengünstig beschaffbar und verarbeitbar sind.

Bevorzugt wird das Flächengebilde derart weiterverarbeitet, dass das Flächengebilde zusammen mit anderen Schichten mittels der Naht vernäht wird und dass der Zuschnitt des Flächengebildes zusammen mit den anderen Schichten durchgeführt wird. Vorzugsweise ist das Flächengebilde als eine Stabilisierungsschicht für einen Airbag vorgesehen, das mit anderen Schichten zusammen kombiniert einen erfindungsgemäßen Bezug, insbesondere für eine erfindungsgemäße Vorrichtung bildet.

Ein weiterer Gegenstand der vorliegenden Erfindung ist zum einen ein Bezug für eine Vorrichtung mit einem erfindungsgemäßen Flächengebilde sowie zum anderen eine Vorrichtung, insbesondere ein Fahrzeugsitz insbesondere mit einem Airbag, mit einem erfindungsgemäßen Bezug, wobei der Bezug mit einem erfindungsgemäßen Flächengebilde versehen ist. Insbesondere weist der Bezug darüber hinaus eine Naht als Sollbruchstelle für einen Airbag auf. Der erfindungsgemäße Bezug umfasst Schichten, insbesondere Gewebeschichten, die üblicherweise für Bezüge zur Herstellung von Komponenten, insbesondere in Kraftfahrzeugen, Verwendung finden. Solche Bezüge werden in der Regel dadurch herstellt, dass verschiedene Zuschnitte von zusammengesetzten Lagen verschiedener Materialien vernäht werden. Hierbei ist es vorteilhaft, wenn die später zu vernähenden Zuschnitte in ihren Nahtbereichen vor dem eigentlichen Vernähen nochmals zugeschnitten werden, weil dadurch ein genaueres Aufeinanderliegen der verschiedenen, zur Herstellung des Bezugs verwendeten Materialien möglich ist. Weiterhin ist es dadurch möglich, zunächst eine Befestigungsnaht zum Verbinden zweier Zuschnitte des herzustellenden Bezugs auszuführen und anschließend Ziernähte im Bereich der Befestigungsnaht, d.h. in räumlicher Nähe der Befestigungsnaht, im Material des Bezugs herzustellen. Bei der Herstellung der Ziernähte ist es erfindungsgemäß vorteilhaft, wenn lediglich eine einfache Lage der Bezugsmaterialien vernäht wird. Dies bedeutet, dass der bei der Herstellung der Befestigungsnaht entstehende Randbereich, d.h. der Nahtüberstand, entweder möglichst klein vorgesehen sein muss oder dass der durch die Befestigungsnaht auf der Rückseite, d.h. der der Sichtseite des Bezugs abgewandten Seite, definierte Randbereich abgeschnitten werden muss. Die erste dieser Alternativen setzt voraus, dass die den Bezug bildenden Materialschichten mit großer Präzision aufeinander passen bzw. insbesondere in ihrem Randbereich aufeinander ausgerichtet sind, was vorteilhafterweise durch einen Randbeschnitt vor dem Nähen erfolgt. Die zweite dieser Alternativen erfordert ebenfalls ein Abschneiden der Materialien des Bezugs und insbesondere des Flächengebildes. Ein solches Abschneiden ist mit dem erfindungsgemäßen Flächengebilde ohne Einbußen hinsichtlich der Stabilität des Bezugs aufgrund beispielsweise von Ausfransungen in einfacher Weise möglich. Es ist daher erfindungsgemäß vorgesehen, für den Bezug ein Flächengebilde zu verwenden, das es erlaubt, nach einem groben Zuschnitt und einem Vernähen einen genauen Zuschnitt zusammen mit Lagen aus anderen verschiedenen Materialien durchzuführen bzw. einen Zuschnitt eines kleinen, außerhalb der Naht verbleibenden Randes auszuführen. Dies ist bei bekannten und unversiegelten - bzw. nicht im Inneren flächig versiegelten Flächengebilden - insbesondere dann nicht möglich, wenn für das Flächengebilde gefordert wird, dass dieses nach einem ersten Zuschnitt - ggf. mit einer gegen randseitige Fransenbildung gerichteten Kantenversiegelung versehen - nicht mehr zugeschnitten werden darf bzw. wenn für das Flächengebilde gefordert wird, dass eine nicht unerhebliche Nahtzugabe von beispielsweise 8 mm verbleiben muss. Solche Forderungen machen die auszuführende Naht unschön und dicken sie auf.

Durch die erfindungsgemäßen Maßnahmen an dem insbesondere stabilisierend wirkenden Flächengebilde, dem Bezug und der Vorrichtung ist es möglich, eine größere Gestaltungsfreiheit hinsichtlich der Form des Bezugs und somit auch der optischen bzw. ästhetischen Eigenschaften der Vorrichtung zu gewinnen. Beispielsweise ist es dadurch möglich, dass Ziernähte lediglich eine einfache Lage der Materialien des Bezugs zusammenfassen. Weiterhin ist es erfindungsgemäß möglich, dickere Bezugsschichten - beispielsweise dicke (z. B. >18 mm) Heizungsschichten bzw. Heizungspads - zu vernähen, bei denen eine Doppelschicht im Bereich der Ziernähte nicht möglich oder unverhältnismäßig teuer wäre. Hierdurch kann der Bezug auf der Vorrichtung glatter und optisch vorteilhafter vorgesehen sein.

Die Erfindung wird nachfolgend anhand von in der Zeichnung dargestellten Ausführungsbeispielen näher erläutert.
- **Figur 1**: zeigt eine schematische Darstellung einer erfindungsgemäßen Vernähungsstelle einer Doppellage eines Bezugsmaterials.
- **Figur 2**: zeigt eine schematische Darstellung einer mit Ziernähten versehenen Befestigungsnaht gemäß dem Stand der Technik.
- **Figur 3**: zeigt eine schematische Darstellung einer erfindungsgemäßen Vernähungsstelle einer Doppellage eines Bezugsmaterials.
- **Figur 4**: zeigt eine schematische Darstellung einer mit Ziernähten versehenen erfindungsgemäßen Befestigungsnaht.
- **Figur 5**: zeigt eine schematische Darstellung eines Zuschnitts eines erfindungsgemäßen Flächengebildes .
- **Figur 6**: zeigt eine perspektivische Darstellung einer erfindungsgemäßen Vorrichtung.

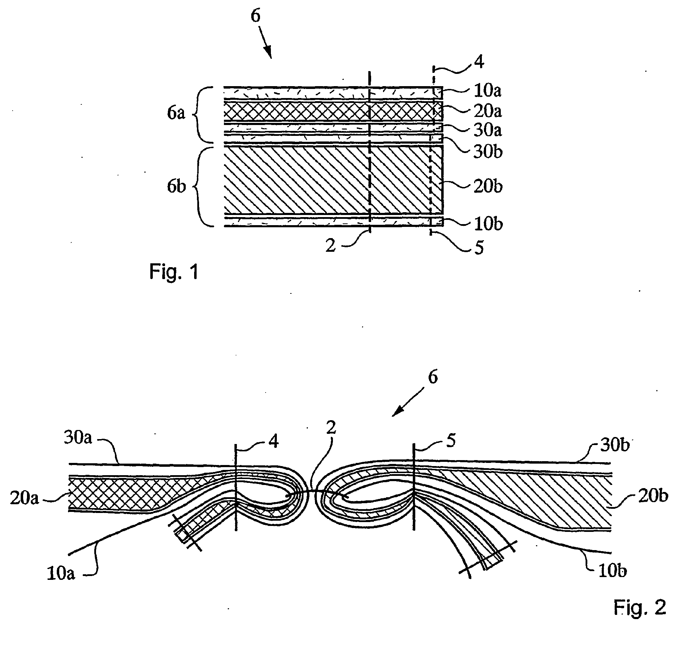

**Figur 1** zeigt eine schematische Darstellung einer erfindungsgemäßen Vernähungsstelle einer Doppellage eines Bezugsmaterials, das für die Herstellung eines Bezugs 6 verwendet wird. Die Doppellage des Bezugsmaterials umfasst an der dargestellten Vernähungsstelle eine erste Einzellage 6a des Bezugs 6 und eine zweite Einzellage 6b des Bezugs 6. Die beiden Einzellagen 6a, 6b sind durch eine Naht 2, die im Folgenden auch als Befestigungsnaht 2 bezeichnet wird, miteinander verbunden. Die erste Einzellage 6a umfasst einen ersten Zuschnitt 10a eines textilen Flächengebildes 10, einen ersten Zuschnitt 20a einer Funktionsschicht 20 und einen ersten Zuschnitt 30a eines Dekormaterials 30. Die zweite Einzellage 6b umfasst einen zweiten Zuschnitt 10b des textilen Flächengebildes 10, einen zweiten Zuschnitt 20b der Funktionsschicht 20 und einen zweiten Zuschnitt 30b des Dekormaterials 30. Durch beide Lagen 6a, 6b des Bezugs 6 hindurch ist an der Vernähungsstelle die Befestigungsnaht 2 ausgeführt. Weiterhin ist durch die erste Lage 6a hindurch eine erste Ziernaht 4 und durch die zweite Lage 6b hindurch eine zweite Ziernaht 5 ausgeführt. Die Ziernähte 4, 5 sind zwischen der Befestigungsnaht 2 und dem Randbereich des Bezugs 6 in unterschiedlichen Abständen zur Befestigungsnaht 2 ausgeführt, was aber vorwiegend der besseren Darstellung und Unterscheidbarkeit der Ziernähte 4, 5 dient. Die Ziernähte 4, 5 können erfindungsgemäß insbesondere auch in gleichem Abstand zur Befestigungsnaht 2 angeordnet sein.

**Figur 2** zeigt eine schematische Darstellung einer mit Ziernähten 4, 5 versehenen Befestigungsnaht 2 gemäß dem Stand der Technik. Hierbei sind gegenüber der in **Figur 1** dargestellten erfindungsgemäßen Ausführung der Ziernähte 4, 5 auch die Ziernähte 4, 5 durch jeweils eine Doppellage des Bezugs 6 hindurch vorgesehen. Hierdurch wird der Nahtbereich um die Befestigungsnaht 2 herum besonders dick und unhandlich, was zu optischen Nachteilen führt und weiterhin bei der Herstellung einer solchen Naht zu Nachteilen, größerem Ausschuss und damit zu höheren Kosten führt. Die eine Seite des mittels der Befestigungsnaht 2 verbundenen Teils des Bezugs 6 weist einen ersten Zuschnitt 10a des Flächengebildes 10, einen ersten Zuschnitt 20a einer Funktionsschicht 20 und einen ersten Zuschnitt 30a eines Dekormaterials 30 auf. Die andere Seite des mittels der Befestigungsnaht 2 verbundenen Teils des Bezugs 6 weist einen zweiten Zuschnitt 10b des Flächengebildes 10, einen zweiten Zuschnitt 20b einer Funktionsschicht 20 und einen zweiten Zuschnitt 30b eines Dekormaterials 30 auf.

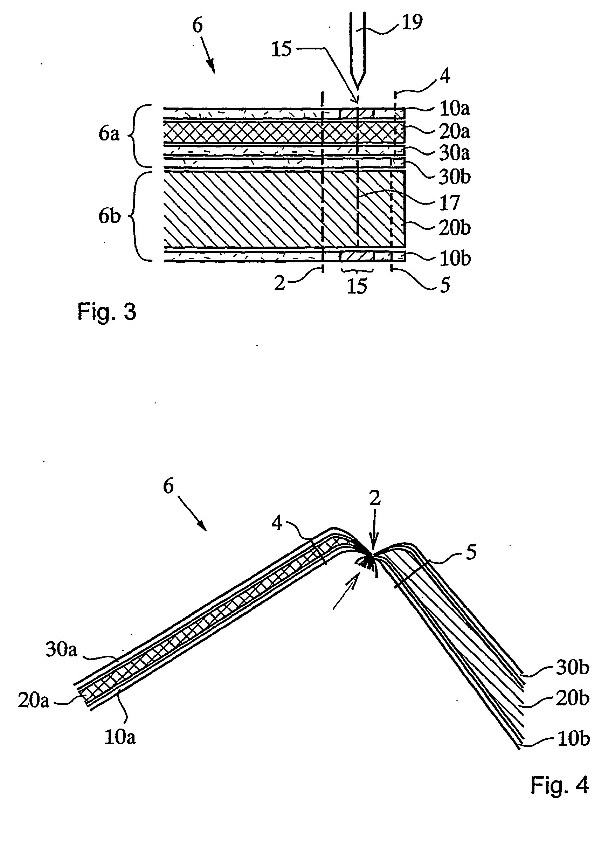

**Figur 3** zeigt in zu **Figur 1** analoger Weise eine schematische Darstellung einer erfindungsgemäßen Vernähungsstelle einer Doppellage eines Bezugsmaterials, das für die Herstellung eines Bezugs 6 verwendet wird. Gleiche Bezugszeichen stehen für die gleichen Teile der Anordnung. In **Figur 3** wird das erfindungsgemäße Verfahren näher erläutert. Mittels der Naht 2 sind wiederum zwei Einzellagen 6a, 6b des Bezugsmaterials vernäht, wobei insbesondere auch eine Schicht 10a, 10b des textilen Flächengebildes 10 mit den anderen Lagen vernäht vorgesehen ist. Das Flächengebilde 10 weist den Versiegelungsbereich 15 als einen Teilbereich seiner Oberfläche auf. In **Figur 3** ist die Naht 2 nicht im Versiegelungsbereich 15 vorgesehen. Es ist jedoch erfindungsgemäß möglich, die Naht 2 auch im Versiegelungsbereich 15 vorzusehen. Weiterhin ist in **Figur 3** ein Messer 19 als Beispiel eines Zuschnittsmittels 19 dargestellt, mittels welchem die miteinander vernähten Lagen des Bezugsmaterials nach einem groben ersten Zuschnitt (zeitlich vor dem Vernähen) nochmals bündig geschnitten werden. Hierbei ist es im Ausführungsbeispiel der **Figur 3** vorgesehen, dass die durch den Zuschnitt des Zuschnittsmittels 19 erzeugte Kante 17, die in **Figur 3** mittels einer gepunkteten Linie angedeutet ist, durch den Versiegelungsbereich 15 geführt vorgesehen ist. Daher geht aus der **Figur 3** das erfindungsgemäße Verfahren mit seinen drei Schritten: Versiegeln, Nähen und Zuschneiden hervor. Das Zuschnittsmittel 19 kann erfindungsgemäß insbesondere auch als Laser ausgebildet sein.

**Figur 4** zeigt eine schematische Darstellung einer mit Ziernähten 4, 5 versehenen erfindungsgemäßen Befestigungsnaht 2. Gleiche Bezugszeichen stehen wieder für die gleichen Teile der Anordnung. Trotz dem eingenähten, die Festigkeit bzw. die Stabilität der Anordnung bestimmenden Flächengebilde 10 kann die Nahtzugabe wegen des nach dem Nähvorgang durchführbaren Zuschnitts der Schließnaht, insbesondere die Nahtzugabe der als Sollbruchstelle vorgesehenen Airbagnaht, reduziert werden, beispielsweise von 8 mm auf 3 mm. Ein solcher Nähprozess ist damit, insbesondere bei dicken Bezugsmaterialien, unkritischer, die Nähbarkeit ist höher und die optische Erscheinung ist wesentlich verbessert. Das erfindungsgemäße Verfahren und das erfindungsgemäße Flächengebilde 10 lässt sich überall da verwenden, wo Nahtzugaben vermindert werden müssen, beispielsweise in Verbindung mit Airbaggürteln, an Türverkleidungen, an Überkopfsystemen oder dergleichen.

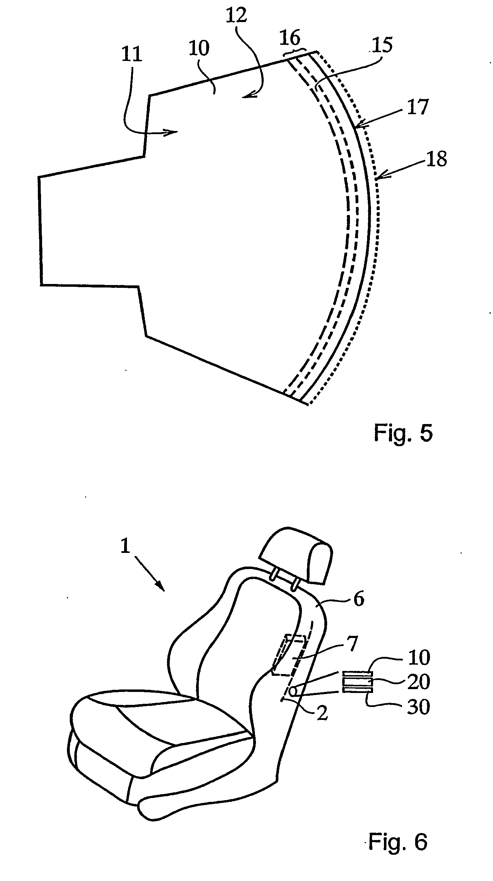

**Figur 5** zeigt eine schematische Darstellung eines Zuschnitts eines erfindungsgemäßen Flächengebildes 10. Das Flächengebilde 10 weist eine erste Oberfläche 11, eine zweite Oberfläche 12, eine Kante 17 und einen Randbereich 16 auf, der den versiegelten Bereich 15 aufweist. Sichtbar ist in **Figur 5** die erste Oberfläche 11. Die Kante 17 entsteht dadurch, dass der Zuschnitt nach dem Einbringen einer in **Figur 5** nicht dargestellten Naht 2 in das Flächengebilde 10 zugeschnitten wird und zwar entlang der Kante 17, die vor dem Zuschnitt der Zuschnittslinie entspricht, die ebenfalls mit dem Bezugszeichen 17 bezeichnet ist. Mit dem Bezugszeichen 18 ist die frühre Kante des Zuschnitts bezeichnet, also diejenige Kante die zeitlich vor dem mit dem Zuschnittsmittel 19 durchgeführten Zuschnittsoperation bestand. Im versiegelten Bereich 15 ist einer Ausfransung des Gewebematerials des Flächengebildes 10 durch die eine zumindest teilweise Verbindung bzw. Verschweißung der Fasern des Gewebes bewirkende Versiegelung wirksam entgegengewirkt. Der versiegelte Bereich 15 ist zumindest teilweise im Inneren des Zuschnitts vorgesehen, so dass der versiegelte Bereich 15 nicht lediglich an der Kante 17 des Zuschnitts befindlich ist. Auch wenn sich der versiegelte Bereich 15 bis an den Rand 17 des Zuschnitts erstreckt, ist durch die Versiegelung auf einem Streifen von beispielsweise 5 mm der Versiegelungsbereich 15 im Inneren des Flächengebildes 10 vorgesehen.

**Figur 6** zeigt eine perspektivische Darstellung einer erfindungsgemäßen Vorrichtung 1, die erfindungsgemäß insbesondere als Sitz oder als eine andere Komponente eines Kraftfahrzeugs vorgesehen ist. Die Vorrichtung 1 weist ein von außen nicht sichtbares Airbagmodul 7 und einen äußeren dekorativen Bezug 6 auf, wobei der Bezug 6 als unterschiedliche Lagen insbesondere das Flächengebilde 10, eine Funktionsschicht 20 und eine Schicht eines Dekormaterials 30 aufweist. Die Funktionsschicht 20 dient beispielsweise als Heizschicht, als Polsterschicht, als Kühlungsschicht oder als Kombinationsschicht mehrerer dieser Funktionen. Die Funktionsschicht 20 und das Dekormaterial 30 werden im folgenden auch als die anderen Schichten 20, 30 des Bezugs 6 bezeichnet. Das Dekormaterial 30 ist erfindungsgemäß als übliches Außenmaterial für dekorative Komponenten von Kraftfahrzeugen vorgesehen, beispielsweise in Leder, in synthetischen Materialien wie Polypropylen oder dergleichen mehr. In dem Bezug 6 ist eine Befestigungsnaht 2 vorgesehen, die insbesondere derart vorgesehen ist, dass zwei Zuschnitte der Materialien des Bezugs 6 miteinander verbunden vorgesehen sind, wobei die Befestigungsnaht 2 als Sollbruchstelle des Bezugs 6 für den Fall eines Auslösens des Airbags 7 dient. Das Flächengebilde 10 ist dabei vorzugsweise als den Bezug stabilisierendes Flächengebilde, insbesondere in Form eines Airbag-Gürtels 10 derart vorgesehen, dass sie in Bereichen außerhalb der Befestigungsnaht 2 durch ihre im Vergleich zur Festigkeit der anderen Bestandteile des Bezugs 6 hohe Reißfestigkeit ein Öffnen des Bezugs 6 lediglich im Bereich der Befestigungsnaht 2 bewirkt.

### Bezugszeichenliste

- 1: Vorrichtung
- 2: Befestigungsnaht
- 4: erste Ziernaht
- 5: zweite Ziernaht
- 6: Bezug
- 7: Airbag/Airbagmodul
- 6a, 6b: Einzellagen des Bezugs
- 15: versiegelter Bereich
- 16: Randbereich
- 17: Zuschnittslinie, Kante des Zuschnitts
- 18: frühere Kante des Zuschnitts
- 19: Zuschnittsmittel
- 10, 10a, 10b: Flächengebilde
- 20, 20a, 20b: Funktionsschicht
- 30, 30a, 30b: Dekormaterial

## Patentansprüche

1. Verfahren zur Verarbeitung eines textilen Flächengebildes (10), **dadurch gekennzeichnet, dass** das Flächengebilde (10) in einem ersten Schritt in einem Versiegelungsbereich (15) verslegelt wird, wobei der Versiegelungsbereich (15) wenigstens einen Teilbereich der Oberfläche (11,12) des Flächengebildes (10) umfasst, wobei in einem zweiten Schritt eine Naht (2) in das Flächengebilde (10) eingebracht wird und wobei das Flächengebilde (10) in einem dritten Schritt entlang einer Zuschnittslinle (17) zugeschnitten wird.

2. Verfahren nach Anspruch 1, **dadurch gekennzeichnet, dass** die Zuschnittslinie (17) im Versiegelungsbereich (15) vorgesehen ist.

3. Verfahren nach einem der vorhergehenden Ansprüche, **dadurch gekennzeichnet. dass** die Naht (2) im Versiegelungsbereich (15) eingebracht wird.

4. Verfahren nach einem der vorhergehenden Ansprüche, **dadurch gekennzeichnet, dass** die Zuschnittslinie (17) im Wesentlichen parallel zur Naht (2) vorgesehen ist

5. Verfahren nach einem der vorhergehenden Ansprüche, **dadurch gekennzeichnet dass** das Flächengebilde (10) in dem Versiegelungsbereich (16) mittels einer Ultraschallbehandlung versiegelt wird,

6. Verfahren nach einem der vorhergehenden Ansprüche, **dadurch gekennzeichnet, dass** das Flächengebilde (10) zusammen mit anderen Schichten (20.30) mittels der Naht (2) vernäht wird und dass der Zuschnitt des Flächengebildes (10) zusammen mit den anderen Schichten (20, 30) durchgeführt wird.

7. Textiles Flächengebilde (10), gefertigt nach einem Verfahren gemäß der vorhergehenden Ansprüche, mit einer Naht (2), einer Oberfläche (11, 12) und wenigstens einer Kante (17), **dadurch gekennzeichnet, dass** das Flächengebilde (10) in einem Versiegelungsbereich (15) verslegelt vorgesehen ist, wobei der Versiegelungsbereich (15) wenigstens einen Teilbereich der Oberfläche (11. 12) des Flächengebildes (10) umfasst.

8. Flächengebilde (10) nach Anspruch 7, **dadurch gekennzeichnet dass** der Versfegelungsbereich (15) an die wenigstens eine Kante (17) angrenzend vorgesehen ist.

9. FfächengeMde (10) nach einem der Ansprüche 7 oder 8, **dadurch gekennzeichnet**s dass die Naht (2) im Versiegelungsbereich (15) vorgesehen ist.

10. Flächengebilde (10) nach einem der Ansprüche 7 bis 9, **dadurch gekennzeichnet, dass** die wenigstens eine Kante (17) im Wesentlichen parallel zur Naht (2) vorgesehen ist.

11. Flächengebilde (10) nach einem der Ansprüche 7 bis 10. **dadurch gekennzeichnet, dass** der Versiegelungsbereich (15) Im Wesentlichen parallel zu der Kante (17) in einer vorgegebenen Brette. Insbesondere 5 mm, vorgesehen ist.

12. Flächengebilde (10) nach einem der Ansprüche 7 bis 11, **dadurch gekennzeichnet, dass** das Flächengebilde (10) eine StabiJlsIerungsschicht für einen Airbag (7) ist

13. Flächengebilde (10) nach einem der Ansprüche 7 bis 12, **dadurch gekennzeichnet, dass** die Naht (2) wenigstens teiwelse als Sollbruchstelte vorgesehen ist.

14. Flächengebilde (10) nach einem der Ansprüche 7 bis 13, **dadurch gekennzeichnet, dass** das Flächengebilde (10) ein Gewebe, insbesondere PolyAmid 6.6, ist.

15. Bezug (6) für eine Vorrichtung (1), insbesondere einen Fahrzeugsitz (1), mit einem Flächengebilde (10) nach einem der Ansprüche 7 bis 14.

16. Bezug (6) nach Anspruch 13, **dadurch gekennzeichnet, dass** in räumlicher Nähe zur Naht (2) wenigstens eine Ziernaht (4, 5) vorgesehen ist, wobei die Ziernaht (4. 5) insbesondere einfachlagig genäht vorgesehen ist.

17. Vorrichtung (1), Insbesondere ein Fahrzeugsitz (1), mit einem ein Flächengebilde (10) nach einem der Ansprüche 7 bis 14 umfassenden Bezug (6), nach einem der Ansprüche 15 oder 16.

18. Vorrichtung (1) nach Anspruch 17, **dadurch gekennzeichnet, dass** die Vorrichtung (1) einen Airbag (7) aufweist.

## Claims

1. Method for processing a textile sheet material (10), **characterized in that** the sheet material (10) is sealed in a sealing region (15) in a first step, the sealing region (15) comprising at least one partial region of the surface (11, 12) of the sheet material (10), a seam (2) being introduced into the sheet material (10) in a second step, and the sheet material (10) being cut along a cutting line (17) in a third step.

2. Method according to Claim 1, **characterized in that** the cutting line (17) is provided in the sealing region (15).

3. Method according to one of the preceding claims, **characterized in that** the seam (2) is introduced in the sealing region (15).

4. Method according to one of the preceding claims, **characterized in that** the cutting line (17) is provided essentially parallel to the seam (2).

5. Method according to one of the preceding claims, **characterized in that** the sheet material (10) is sealed in the sealing region (15) by means of an ultrasound treatment.

6. Method according to one of the preceding claims, **characterized in that** the sheet material (10) is sewn up together with other layers (20, 30) by means of the seam (2), and **in that** the cutting of the sheet material (10) is carried out together with the other layers (20, 30).

7. Textile sheet material (10), manufactured according to a method according to the preceding claims, with a seam (2), a surface (11, 12) and at least one edge (17), **characterized in that** the sheet material (10) is provided sealed in a sealing region (15), the sealing region (15) comprising at least one partial region of the surface (11, 12) of the sheet material (10).

8. Sheet material (10) according to Claim 7, **characterized in that** the sealing region (15) is provided adjacent to the at least one edge (17).

9. Sheet material (10) according to either of Claims 7 and 8, **characterized in that** the seam (2) is provided in the sealing region (15).

10. Sheet material (10) according to one of Claims 7 to 9, **characterized in that** the at least one edge (17) is provided essentially parallel to the seam (2).

11. Sheet material (10) according to one of Claims 7 to 10, **characterized in that** the sealing region (15) is provided in a predetermined width, in particular 5 mm, essentially parallel to the edge (17).

12. Sheet material (10) according to one of Claims 7 to 11, **characterized in that** the sheet material (10) is a stabilizing layer for an airbag (7).

13. Sheet material (10) according to one of Claims 7 to 12, **characterized in that** the seam (2) is at least partially provided as a predetermined breaking point.

14. Sheet material (10) according to one of Claims 7 to 13, **characterized in that** the sheet material (10) is a fabric, in particular polyamide 6.6.

15. Cover (6) for a device (1), in particular a vehicle seat (1), with a sheet material (10) according to one of Claims 7 to 14.

16. Cover (6) according to Claim 13, **characterized in that** at least one decorative seam (4, 5) is provided in the spatial vicinity of the seam (2), the decorative seam (4, 5) being provided in particular in a manner sewn in a single layer.

17. Device (1), in particular a vehicle seat (1), with a cover (6), according to either of Claims 15 and 16, said cover comprising a sheet material (10) according to one of Claims 7 to 14.

18. Device (1) according to Claim 17, **characterized in that** the device (1) has an airbag (7).

## Revendications

1. Procédé de traitement d'une structure en nappe textile (10) **caractérisé en ce que** la structure en nappe (10), dans une première étape, est scellée dans une région de scellement (15), la région de scellement (15) comprenant au moins une région partielle de la surface (11, 12) de la structure en nappe (10), et dans une deuxième étape, une couture (2) est pratiquée dans la structure en nappe (10) et la structure en nappe (10) est découpée, dans une troisième étape, le long d'une ligne de découpure (17).

2. Procédé selon la revendication 1, **caractérisé en ce que** la ligne de découpure (17) est prévue dans la région de scellement (15).

3. Procédé selon l'une quelconque des revendications précédentes, **caractérisé en ce que** la couture (2) est pratiquée dans la région de scellement (15).

4. Procédé selon l'une quelconque des revendications précédentes, **caractérisé en ce que** la ligne de découpure (17) est essentiellement prévue parallèlement à la couture (2).

5. Procédé selon l'une quelconque des revendications précédentes, **caractérisé en ce que** la structure en nappe (10) est scellée dans la région de scellement (15) au moyen d'un traitement par ultrasons.

6. Procédé selon l'une quelconque des revendications précédentes, **caractérisé en ce que** la structure en nappe (10) est cousue conjointement avec d'autres couches (20, 30) au moyen de la couture (2) et **en ce que** la découpe de la structure en nappe (10) est réalisée conjointement avec les autres couches (20, 30).

7. Structure en nappe textile (10), fabriquée selon un procédé selon les revendications précédentes, comprenant une couture (2), une surface (11, 12) et au moins un bord (17), **caractérisée en ce que** la structure en nappe (10) est scellée dans une région de scellement (15), la région de scellement (15) comprenant au moins une région partielle de la surface (11, 12) de la structure en nappe (10).

8. Structure en nappe (10) selon la revendication 7, **caractérisée en ce que** la région de scellement (15) est prévue à côté de l'au moins un bord (17).

9. Structure en nappe (10) selon l'une quelconque des revendications 7 ou 8, **caractérisée en ce que** la couture (2) est prévue dans la région de scellement (15).

10. Structure en nappe (10) selon l'une quelconque des revendications 7 à 9, **caractérisée en ce que** l'au moins un bord (17) est prévu essentiellement parallèlement à la couture (2).

11. Structure en nappe (10) selon l'une quelconque des revendications 7 à 10, **caractérisée en ce que** la région de scellement (15) est prévue essentiellement parallèlement au bord (17) dans une largeur prédéfinie, notamment de 5 mm.

12. Structure en nappe (10) selon l'une quelconque des revendications 7 à 11, **caractérisée en ce que** la structure en nappe (10) est une couche stabilisante pour un airbag (7).

13. Structure en nappe (10) selon l'une quelconque des revendications 7 à 12, **caractérisée en ce que** la couture (2) est prévue au moins en partie sous forme de zone destinée à la rupture.

14. Structure en nappe (10) selon l'une quelconque des revendications 7 à 13, **caractérisée en ce que** la structure en nappe (10) est un tissu, notamment du polyamide 6.6.

15. Revêtement (6) pour un dispositif (1), notamment un siège de véhicule (1), comprenant une structure en nappe (10) selon l'une quelconque des revendications 7 à 14.

16. Revêtement (6) selon la revendication 13, **caractérisé en ce qu'**au moins une couture décorative (4, 5) est prévue à proximité spatiale de la couture (2), la couture décorative (4, 5) étant en particulier cousue sur une seule couche.

17. Dispositif (1), en particulier siège de véhicule (1), comprenant un revêtement (6) selon l'une quelconque des revendications 15 ou 16, comprenant une structure en nappe (10) selon l'une quelconque des revendications 7 à 14.

18. Dispositif (1) selon la revendication 17, **caractérisé en ce que** le dispositif (1) présente un airbag (7).
